(19) Europäisches Patentamt
European Patent Office
Office européen des brevets

(11) **EP 1 612 237 B1**

(12) **EUROPÄISCHE PATENTSCHRIFT**

(45) Veröffentlichungstag und Bekanntmachung des Hinweises auf die Patenterteilung:
**30.01.2008  Patentblatt 2008/05**

(51) Int Cl.:
*C08J 5/18* (2006.01)      *C08J 11/06* (2006.01)

(21) Anmeldenummer: **05013880.9**

(22) Anmeldetag: **28.06.2005**

(54) **Verfahren zur Herstellung von biaxial orientierten Folien auf Basis von kristallisierbaren Thermoplasten unter Verwendung von aufkondensiertem Regenerat**

Process for producing biaxial oriented films on the basis of crystallizable thermoplastic polymers using post-condensed regenerate

Procédé de préparation de feuilles orientées biaxialement à base de polymères thermoplastiques pouvant être cristallisés en utilisant d'un régénérat recondensé

(84) Benannte Vertragsstaaten:
**DE FR GB LU**

(30) Priorität: **01.07.2004  DE 102004031794**

(43) Veröffentlichungstag der Anmeldung:
**04.01.2006  Patentblatt 2006/01**

(73) Patentinhaber: **Mitsubishi Polyester Film GmbH 65203 Wiesbaden (DE)**

(72) Erfinder:
• **Kern, Ulrich, Dr.**
  **55218 Ingelheim (DE)**
• **Murschall, Ursula, Dr.**
  **55283 Nierstein (DE)**
• **Kuhmann, Bodo, Dipl.-Ing.**
  **65594 Runkel (DE)**
• **Crass, Günther, Dipl.-Ing.**
  **65232 Taunusstein (DE)**

(74) Vertreter: **Plate, Jürgen et al Zounek Plate Schweitzer Patentanwaltskanzlei Rheingaustrasse 196 65203 Wiesbaden (DE)**

(56) Entgegenhaltungen:
EP-A- 0 483 665          EP-A- 1 125 970
EP-A- 1 418 195          DE-A1- 10 105 107

## Beschreibung

Die Erfindung betrifft ein Verfahren zur Herstellung einer biaxial orientierten Folie, die mindestens einen kristallisierbaren Thermoplasten als Hauptbestandteil und mindestens 500 ppm, bezogen auf das Gewichts des bzw. der Thermoplasten, eines Pigments enthält.

Biaxial orientierte Folien auf Basis von kristallisierbaren Thermoplasten sind bekannt und zahlreich beschrieben. Bei der Herstellung nahezu aller biaxial orientierten Folien wird Eigenregenerat in unterschiedlichen Anteilen verwendet, wobei dieses Eigenregenerat in der Regel aus prozessinhärent anfallendem Folienverschnitt hergestellt wird. Vor allem bei Foliendicken unter 4 μm sowie bei Folien mit einer Dicke von mehr als 300 μm ist die Verwendung von hohen Anteilen an Eigenregenerat kritisch, da solche Folien häufig nicht mehr verfahrenssicher hergestellt werden können. Im Dickenbereich von 5 bis 300 μm liegt der Anteil an Eigenregenerat in der Regel zwischen 20 und 40 Gew.-%, bezogen auf das Gesamtgewicht der Thermoplasten.

Bei sehr dünnen und sehr dicken Folien, also Folien, die mit einem üblicherweise niedrigen Eigenregeneratanteil hergestellt werden, sind die Ausbeuten bei der Folienherstellung eher niedrig, was zu einem Überschuss an Folienverschnitt und somit Eigenregenerat führt. Dies macht die Herstellung solcher Folien unter Umständen unwirtschaftlich.

In der EP-A 0 483 665 ist ein Verfahren zur Aufarbeitung von Polyester-Abfällen mit unterschiedlichen Molmassen und Veredelungsgraden offenbart, bei dem die Molmasse durch eine Schmelznachkondensation erhöht wird. Von der Verwendung von aufgearbeitetem Polyester in biaxial orientierten Folien, die den höchsten Veredelungsgrad besitzen, wird jedoch abgeraten.

In der EP-A 1 418 195 ist ein Verfahren zur Herstellung einer Thermoplastfolie unter Verwendung von Kunststofflaschenrecyclat beschrieben. Die Verwendung solcher Sekundärrohstoffe (Kunststofflaschenrecyclat) verbietet sich insbesondere bei Folien in medizinischen Anwendungen (mangelnde Rückverfolgbarkeit) und ist limitiert bei weißen Folien. Darüber hinaus ist die Verwendung solcher Recyclate in Folien, die für Lebensmittelanwendungen vorgesehen sind, nicht in allen Ländern zulässig. Weiterhin enthalten die auf PET-Flaschen basierenden Flakes oder Recyclate häufig weitere Additive, wie Isophthalsäure, die die mechanischen Eigenschaften der Folien verschlechtern können. Daher ist die Verwendung solcher Sekundärrohstoffe auf maximal 50 Gew.-% beschränkt.

Aufgabe der vorliegenden Erfindung war es demgemäß, ein Verfahren zur Herstellung einer biaxial orientierten Folie bereitzustellen, bei dem ein hoher Anteil an aufkondensiertem Eigenregenerat verwendet werden kann, ohne dabei die Eigenschaften der Folie zu beeinträchtigen. Die Folie soll neben einer guten Verstreckbarkeit und einer verfahrenssicheren Herstellung vor allem gute mechanische sowie optische Eigenschaften aufweisen. Zu den guten optischen Eigenschaften zählt beispielsweise eine homogene, streifenfreie Oberfläche über die gesamte Folienbreite und -länge. Zu den guten mechanischen Eigenschaften zählen unter anderem ein hoher E-Modul ($E_{MD}$ > 3000 N/mm$^2$; $E_{TD}$ > 4200 N/mm$^2$) und gute Reißfestigkeitswerte in Längsrichtung (MD = machine direction) oder Querrichtung (TD = transverse direction), wobei MD > 90 N/mm$^2$ und TD > 120 N/mm$^2$ ist. Gute Verstreckbarkeit und verfahrenssichere Herstellung heißt, daß sich die Folie bei ihrer Herstellung sowohl in Längs- als auch in Querrichtung hervorragend und ohne Abrisse orientieren und daß sich die fertige Folie gut aufwickeln und konfektionieren lässt. Darüber hinaus sollte die erfindungsgemäße Folie erneut rezyklierbar sein, insbesondere ohne Verlust der optischen und der mechanischen Eigenschaften.

Gelöst wird diese Aufgabe durch ein Verfahren zur Herstellung einer biaxial orientierten Folie, die mindestens einen kristallisierbaren Thermoplasten als Hauptbestandteil und mindestens 500 ppm, bezogen auf das Gewicht des bzw. der Thermoplasten, eines Pigments enthält, das **dadurch gekennzeichnet** ist, daß die Folie mit mindestens 20 Gew.-% an, aufkondensiertem Eigenregenerat hergestellt wird.

Die Dicke der nach dem erfindungsgemäßen Verfahren hergestellten orientierten (= verstreckten) Folie beträgt allgemein 2 bis 500 μm, bevorzugt 5 bis 350 μm, besonders bevorzugt 10 bis 300 μm. Die biaxial orientierte Folie enthält als Hauptbestandteil einen kristallisierbaren Thermoplasten.

Unter "kristallisierbaren Thermoplasten" sollen im Zusammenhang mit der vorliegenden Erfindung kristallisierbare Homopolymere, kristallisierbare Copolymere, kristallisierbare Compounds, kristallisierbare Recyclate und andere Variationen von kristallisierbaren Thermoplasten verstanden werden. Geeignete kristallisierbare bzw. teilkristalline Thermoplaste sind beispielsweise Polyethylenterephthalat (PET), Polybutylenterephthalat (PBT), Polyethylennaphthalat (PEN), wobei Polyethylenterephthalat bevorzugt ist.

Die erfindungsgemäß hergestellte Folie enthält bei einer Dicke von weniger als 4 μm bevorzugt nicht mehr als 50 Gew.-%, bevorzugt etwa 30 bis 40 Gew.-%, an aufkondensiertem Eigenregenerat. Im Dickenbereich von 4 bis 300 μm kann der Anteil an aufkondensiertem Eigenregenerat bis zu 100 Gew.-% betragen. Bevorzugt ist ein Anteil von 20 bis 80 Gew.-%. Bei einer Dicke von mehr als 300 μm beträgt der Anteil an aufkondensiertem Eigenregenerat zweckmäßig bis zu 70 Gew.-%. Bevorzugt ist ein Anteil von 20 bis 60 Gew.-%.

Die Folie enthält mindestens ein Pigment, wobei der Pigmentanteil vorzugsweise etwa 500 ppm bis 25 Gew.-% beträgt, bezogen auf das Gewicht des kristallisierbaren Thermoplasten. Geeignete Pigmente sind vorzugsweise Titandioxid, Bariumsulfat, Calciumcarbonat, Kaolin, Siliziumdioxid sowie anorganische Buntpigmente und Schwarzpigmente, wobei Titandioxid (Anatas oder Rutil), Bariumsulfat, Calciumcarbonat und Siliziumdioxid bevorzugt sind. Die Folie kann auch Mischungen von zwei und mehr verschiedenen Pigmenten oder Mischungen von Pigmenten gleicher Zusammensetzung, aber unterschiedlicher Partikelgröße enthalten.

Durch geeignete Zusatzstoffe kann die Folie UV-stabilisiert, flammhemmend ausgerüstet, siegelfähig, ein- oder beidseitig beschichtet, hydrolysestabilisiert, mit Antioxidantien ausgerüstet, chemisch vorbehandelt und/oder flammbehandelt sein. Sie kann weiterhin optische Aufheller, Schönungsmittel wie Blau- oder Rotfarbstoffe, IR-Absorber, Gleitmittel und/oder organische Farbstoffe zur Einfärbung enthalten sowie durch die Wahl geeigneter Copolymere tiefziehfähig gemacht werden.

Die biaxial orientierte Folie kann sowohl ein- als auch mehrschichtig sein. Die Folie kann ebenfalls mit diversen Copolyestern, Haftvermittlern, Silikon oder Silan beschichtet sein. In der mehrschichtigen Ausführungsform ist die Folie aus mindestens einer Kernschicht und mindestens einer Deckschicht aufgebaut, wobei insbesondere ein dreischichtiger A-B-A oder A-B-C Aufbau bevorzugt ist.

Die erfindungsgemäß hergestellten Folien können symmetrisch oder asymmetrisch aufgebaut sein, wobei verschiedene, gegebenenfalls auch mit zusätzlichen Additiven ausgestattete, Polyester oder solche mit gleicher chemischer Zusammensetzung, jedoch mit unterschiedlichem Molekulargewicht und verschiedener Viskosität durch Coextrusion vereinigt werden können. Die Kernschicht der ein- und der mehrschichtigen Folie besteht bevorzugt aus einer Mischung aus Originalrohstoff, Eigenregenerat und aufkondensiertem Eigenregenerat oder aus einer Mischung aus Originalrohstoff und aufkondensiertem Eigenregenerat oder aus einer Mischung aus Eigenregenerat und aufkondensiertem Eigenregenerat. Die Deckschichten der mehrschichtigen Folie können beispielsweise aus Polyethylenterephthalat-Homopolymeren oder aus Polyethylenterephthalat-Polyethylennaphthalat-Copolymeren oder Compounds bestehen.

Die Thermoplastfolie kann als ein- oder mehrschichtige Folie mit gleichen oder unterschiedlich ausgebildeten Oberflächen hergestellt werden. So kann beispielsweise eine Oberfläche pigmentiert sein und die andere nicht, oder alle Schichten enthalten Pigmentpartikel. Mehrschichtige Folie werden zweckmäßig durch Coextrusion hergestellt. Eine oder beide Oberflächen der Folie können nach bekannten Verfahren mit einer üblichen funktionalen Beschichtung versehen werden. Schließlich können bei der Herstellung der Folien weitere Rohstoffe und/oder weitere übliche Additive in üblicher Menge von 0,1 bis maximal 30 Gew.-%, bezogen auf das Gewicht der Folie, zugesetzt werden.

Bedingt durch die Trocknung der eingesetzten Polymere und den Extrusionsprozess erfolgt ein Viskositätsabbau der Polymere. Die Viskosität des beim Produktionsprozess eingesetzten Regenerates, das aus inhärent angefallenem Folienverschnitt in einem nachfolgenden Extrusionsschritt erzeugt wird, ist durch den zusätzlichen Extrusionsschritt naturgemäß niedriger als die Viskosität des eingesetzten Originalrohstoffes. Der Viskositätsabbau des Eigenregenerates ist neben dem Extrusionsschritt auch von Art und Menge des Pigmentes oder anderer Additive abhängig. Der Viskositätsabbau des Eigenregenerates kann bei hochpigmentierten Folien oder bei anderen komplexen Rezepturierungen so hoch sein, daß lediglich nur noch 10% Eigenregenerat eingesetzt werden kann. Damit ist eine wirtschaftliche Folienproduktion unter Umständen nicht mehr gegeben, da der Regeneratkreislauf nicht geschlossen ist. Hochwertige abgebaute Regenerate müssen notgedrungen verworfen werden. Würde man diese wieder einsetzen, käme es durch den Viskositätsabbau zu enormen Viskositätsschwankungen, die die Produktionsstabilität dramatisch reduzieren oder gar einen Herstellprozess unmöglich machen.

Durch den erfindungsgemäßen Einsatz von aufkondensiertem Eigenregenerat wird dies vermieden. Die Aufkondensation des Eigenregenerates ist sowohl über Schmelzenachkondensation als auch über Festphasennachkondensation möglich. Die Festphasennachkondensation kann beispielsweise in einem Fließbett-Trockner unter Inertgas bei Temperaturen von über 200 °C erfolgen. Eine andere Möglichkeit ist beispielsweise die diskontinuierliche Festphasennachkondensation in einem Taumeltrockner bei Temperaturen von mehr als 200 °C bei einem Druck von weniger als 10 mbar.

Durch das Aufkondensieren des Eigenregenerats wird der Viskositätsabbau weitgehend oder vollständig rückgängig gemacht. Die Standard-Viskosität SV (DCE) des Regenerats wird durch die Aufkondensation allgemein um mindestens 100, bevorzugt um 120 bis 250, erhöht. Damit kann das aufkondensierte Eigenregenerat wie Originalrohstoff behandelt werden, was wirtschaftlich von enormer Bedeutung ist. Der Viskositätsaufbau lässt sich über Temperatur, Unterdruck und Zeit exakt steuern. Da das aufkondensierte Eigenregenerat wie Originalrohstoff zu behandeln ist, ist es durchaus möglich, eine biaxial orientierte Folie mit hohem Veredelungsgrad aus 100 Gew.-% aufkondensiertem Eigenregenerat verfahrenssicher zu produzieren. Eine so hergestellte Folie lässt sich ohne Probleme erneut regenerieren.

Die Folie aus beispielsweise 20 bis 100 Gew.-% aufkondensiertem Eigenregenerat (je nach Dicke) läßt sich bei ihrer Herstellung sowohl in Längsrichtung als auch in Querrichtung hervorragend und ohne Abrisse orientieren.

Das aufkondensierte Eigenregenerat sollte, wie auch der Originalrohstoff, vorgetrocknet werden. Diese Vortrocknung beinhaltet ein gradielles Erhitzen bevorzugt unter reduziertem Druck (20 bis 80 mbar, vorzugsweise 30 bis 60 mbar, insbesondere 40 bis 50 mbar) sowie Rühren und gegebenenfalls ein Nachtrocknen bei konstanter, erhöhter Temperatur ebenfalls bevorzugt unter reduziertem Druck. Die Polymere werden vorzugsweise bei Raumtemperatur aus einem Dosierbehälter in der gewünschten Abmischung zusammen mit den Polymeren der Basis- und/oder Deckschichten und ggf. anderen Rohstoffkomponenten chargenweise in einen Vakuumtrockner gefüllt, der im Laufe der Trocken- bzw. Verweilzeit ein Temperaturspektrum von 10 °C bis 160 °C, vorzugsweise 20 °C bis 150 °C, insbesondere 30 °C bis 130 °C durchläuft. Während der ca. 6-stündigen, vorzugsweise 5-stündigen, insbesondere 4-stündigen Verweilzeit sollte die Rohstoffmischung mit 10 bis 70 Upm, vorzugsweise 15 bis 65 Upm, insbesondere 20 bis 60 Upm gerührt werden. Das so vorkristallisierte bzw. vorgetrocknete Rohstoffgemisch wird in einem nachgeschalteten, ebenfalls evakuierten Behälter bei 90° bis 180 °C, vorzugsweise 100°C bis 170°C, insbesondere 110°C bis 160°C für 2 bis 8 Stunden, vorzugsweise 3 bis 7 Stunden, insbesondere 4 bis 6 Stunden nachgetrocknet.

Bei dem bevorzugten Extrusionsverfahren zur Herstellung der Polyesterfolie wird das aufgeschmolzene Polyestermaterial mit den Additiven durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und in Längsrichtung bzw. in Längs-, in Quer- und nochmals in Längs- und/oder Querrichtung gestreckt. Die Strecktemperaturen liegen im allgemeinen bei $T_g$ + 10 °C bis $T_g$ + 60 °C ($T_g$ = Glastemperatur), das Streckverhältnis der Längsstreckung liegt üblicherweise bei 2 bis 6, insbesondere bei 2,5 bis 4,5, das der Querstreckung bei 2 bis 5, insbesondere bei 3 bis 4,5, und das der ggf. durchgeführten zweiten Längsstreckung bei 1,1 bis 3. Die erste Längsstreckung kann ggf. gleichzeitig mit der Querstreckung (Simultanstreckung) durchgeführt werden. Anschließend folgt die Thermofixierung der Folie bei Ofentemperaturen von 200 bis 260 °C, insbesondere bei 220 bis 250 °C. Anschließend wird die Folie abgekühlt und aufgewickelt.

Durch die Kombination ausgezeichneter Eigenschaften eignet sich die erfindungsgemäß hergestellte Folie hervorragend für eine Vielzahl verschiedener Anwendungen, beispielsweise für Kabel- und Motorisolation, Thermotransferfolien, Innenraumverkleidungen, für Messebau und Messeartikel, Displays, Schilder, Etiketten, Schutzverglasungen von Maschinen und Fahrzeugen sowie im Beleuchtungssektor, Laden- und Regalbau, als Werbeartikel, als Kaschiermedium, für Lebensmittelanwendungen, medizinische Anwendungen, technische Folien, Kondensatoren, Klebebänder, Deckelfolien und vieles mehr.

Die Erfindung wird anhand der folgenden Ausführungsbeispiele näher erläutert. Prozente stehen in den Beispielen für Gewichtsprozente, soweit nicht anders angegeben oder aus dem Zusammenhang unmittelbar ersichtlich.

Die Folieneigenschaften wurden wie folgt geprüft:

### *Oberflächendefekte und/oder homogene Einfärbung*

Die Oberflächendefekte und/oder die homogene Einfärbung wurden visuell bestimmt.

### *Mechanische Eigenschaften*

Der E-Modul und die Reißfestigkeit wurden in Längs- und Querrichtung nach ISO 527-1-2 gemessen.

### *SV (DCE), IV (DCE)*

Die Standardviskosität SV (DCE) wurde angelehnt an DIN 53726 als 1 gew.-%ige Lösung in Dichloressigsäure (DCE) bei 25°C gemessen. SV (DCE) = ($\eta_{rel}$-1) x 1000. Die intrinsische Viskosität (IV) berechnete sich wie folgt aus der Standardviskosität (SV)

$$IV\ (DCE) = 6{,}67 \times 10^{-4}\ SV\ (DCE) + 0{,}118$$

In den nachstehenden Beispielen und Vergleichsbeispielen handelt es sich jeweils um ein- oder mehrschichtige Folien, die wie vorher beschrieben extrudiert werden.

Beispiel 1

Es wurde eine 350 μm dicke weiße Monofolie hergestellt aus einer Mischung von

9% PET-Klarrohstoff (M04 der Firma KoSa, Deutschland) mit einem SV-Wert von 980,

1 % Masterbatch, das neben PET 4 % Titandioxid sowie 3 % Calciumcarbonat enthielt und das einen SV-Wert von 810 aufwies,

10% Eigenregenerat, das aus 100% inhärent angefallenen Folienverschnitt bestand; der SV-Wert des Materials lag bei 790;

80% aufkondensiertes Regenerat, das aus 100% inhärent angefallenem Eigenregenerat bestand; der SV-Wert des Materials lag bei 970.

Diese Folie sowie das dabei inhärent angefallene Folienverschnitt hatten einen SV-Wert von 850, das daraus hergestellte Eigenregenerat einen SV-Wert von 790. Durch die Nachkondensation in einem Taumeltrockner wurde das Eigenregenerat zu einem SV-Wert von 970 aufgearbeitet.

Die Gesamtausbeute bei der Herstellung dieser Folie (= Anteil verkaufsfähiger Folie zu eingesetztem Extrudat) betrug 64%, d.h. 36% des Extrudats fielen wieder als Verschnitt an. Unter diesen Bedingungen war der Rohstoffkreislauf geschlossen.

Beispiel 2

Es wurde eine 4,5 $\mu$m dicke Monofolie hergestellt aus einer Mischung von

20% PET-Klarrohstoff (RT49 der Firma KoSa, Deutschland) mit einem SV-Wert von 810,

12% Masterbatch mit einem SV-Wert von 810, das neben PET 1 Gew.-% Siliciumdioxid (®Sylobloc, Fa. Grace, Deutschland) enthielt,

28% Eigenregenerat,

40% aufkondensiertes Eigenregenerat mit einem SV-Wert von 810.

Beispiel 3

Es wurde eine 12 $\mu$m dicke ABA-Folie hergestellt mit Deckschichten (je 1 $\mu$m dick) aus einer Mischung von

90% PET-Klarrohstoff (RT49 der Firma KoSa, Deutschland) mit einem SV-Wert von 810 und

10% Masterbatch mit einem SV-Wert von 810, das neben PET 1 Gew.-% Siliciumdioxid (®Sylobloc, Fa. Grace, Deutschland) enthielt, und einer Basisschicht (10 $\mu$m dick) aus einer Mischung von

40% PET-Klarrohstoff (RT49 der Firma KoSa, Deutschland) mit einem SV-Wert von 810,

30% Eigenregenerat und aufkondensiertem Eigenregenerat mit einem SV-Wert von 810.

Beispiel 4

Es wurde eine 50 $\mu$m dicke Monofolie hergestellt aus einer Mischung von

20% PET-Rohstoff (M80 der Firma KoSa, Deutschland), der neben PET 18 Gew.-% Bariumsulfat (®Blanc fixe, Fa. Sachtleben, Deutschland) enthielt. Der SV-Wert betrug 810,

40% Eigenregenerat und

40% aufkondensiertes Eigenregenerat mit einem SV-Wert von 810.

Vergleichsbeispiel V1

Beispiel 1 wurde wiederholt, nun jedoch ohne den Einsatz von aufkondensiertem Eigenregenerat. Um einen SV-Wert der Folie von 850 bei sonst gleichen Eigenschaften zu erreichen, war folgende Rezeptur erforderlich:

81 % PET-Klarrohstoff (M04 der Firma KoSa, Deutschland) mit einem SV-Wert von 980,

9% Masterbatch, das neben PET 4 Gew.-% Titandioxid sowie 3 Gew.-% Calciumcarbonat enthielt und das einen SV-Wert von 810 aufwies und

10% Regenerat, das aus inhärent angefallenem Folienverschnitt bestand.

Der Mischungs-SV der Rezeptur betrug analog zu Beispiel 1 etwa 950. Der SV-Wert-Abbau während der Trocknung und der Extrusion zur Folienherstellung betrug ca. 100 SV-Wert Einheiten, so daß der SV-Wert der Folie bei 850 lag.

Die Viskosität der einzelnen Rohstoffkomponenten Originalrohstoff, Masterbatch und Regenerat waren sehr unterschiedlich, was die Homogenität der Polymerschmelze drastisch verschlechterte.

Bei einer Gesamtausbeute von 64% bei der Folienherstellung konnten hier lediglich 10% Folienverschnitt zurückgeführt werden, was die Folienherstellung extrem unwirtschaftlich machte.

Vergleichsbeispiel V2

Beispiel 1 wurde wiederholt. Im Gegensatz zu Beispiel 1 enthielt die 350 $\mu$m dicke Folie 90 Gew.-% Eigenregenerat. Die Rezeptur war demnach wie folgt:

9% M04 (PET-Klarrohstoff der Firma KoSa, Deutschland mit einem SV-Wert von 980),

1% Masterbatch, das neben PET 4 Gew.-% Titandioxid sowie 3 Gew.-% Calciumcarbonat enthält und das einen SV-Wert von 810 aufweist,

90% Eigenregenerat, das aus 100% inhärent angefallenen Folienverschnitt besteht; der SV-Wert des Materials liegt bei 790.

Mit dieser Rezeptur wäre zwar der Rohstoffkreislauf geschlossen, aber es war keine Folie prozesssicher herstellbar.

Die Eigenschaften der gemäß den verschiedenen Beispielen (B) und Vergleichsbeispielen (V) hergestellten Folien sind in der nachfolgenden Tabelle dargestellt:

| | | | B1 | B2 | B3 | B4 | V1 | V2 |
|---|---|---|---|---|---|---|---|---|
| Dicke | | | 350 | 4,5 | 12 | 50 | 350 | 350 |
| Reißfestigkeit | längs | [N/mm$^2$] | 190 | 300 | 250 | 150 | 195 | |
| | quer | [N/mm$^2$] | 230 | 250 | 260 | 240 | 230 | |
| E-Modul | längs | [N/mm$^2$] | 3900 | 5000 | 4200 | 3600 | 4000 | |
| | quer | [N/mm$^2$] | 4200 | 4300 | 5100 | 5200 | 4150 | |
| Oberflächendefekte | | | keine | keine | keine | keine | keine | |
| Rohstoffkreislauf geschlossen? | | | ja | ja | ja | ja | nein | ja |
| Prozessstabilität* | | | o | o | o | o | o | - |
| * o = unverändert gegenüber Standard<br>- = verschlechtert gegenüber Standard | | | | | | | | |

**Patentansprüche**

1. Verfahren zur Herstellung einer biaxial orientierten Folie, die mindestens einen kristallisierbaren Thermoplasten als Hauptbestandteil und mindestens 500 ppm, bezogen auf das Thermoplast-Gewicht, eines Pigments enthält, **dadurch gekennzeichnet, daß** dabei mindestens 20 Gew.-%, bezogen auf das Gewicht der Folie, an aufkondensiertem Eigenregenerat eingesetzt werden.

2. Verfahren gemäß Anspruch 1, **dadurch gekennzeichnet, daß** die Folie eine Dicke von 2 bis 500 $\mu$m, bevorzugt 5 bis 350 $\mu$m, aufweist.

3. Verfahren gemäß Anspruch 1 oder 2, **dadurch gekennzeichnet, daß** der Folie bis zu 25 Gew.-%, bezogen auf das Gewicht des bzw. der Thermoplasten, mindestens eines Pigments zugesetzt werden.

4. Verfahren gemäß einem oder mehreren der Ansprüche 1 bis 3, **dadurch gekennzeichnet, daß** die Folie durch Extrudieren als einschichtige Folie hergestellt wird.

5. Verfahren gemäß einem oder mehreren der Ansprüche 1 bis 3, **dadurch gekennzeichnet, daß** die Folie durch Coextrudieren als mehrschichtige Folie mit mindestens einer Kernschicht und mindestens einer Deckschicht hergestellt wird.

6. Verfahren gemäß einem oder mehreren der Ansprüche 1 bis 5, **dadurch gekennzeichnet, daß** als Pigment Titandioxid, Bariumsulfat, Calciumcarbonat, Kaolin, Siliziumdioxid und/oder ein anorganisches Bunt- oder Schwarzpigment eingesetzt wird.

7. Verfahren gemäß einem oder mehreren der Ansprüche 1 bis 6, **dadurch gekennzeichnet, daß** ein Regenerat eingesetzt wird, das durch Schmelze- oder Festphasennachkondensation aufkondensiert ist.

8. Verfahren gemäß einem oder mehreren der Ansprüche 1 bis 7, **dadurch gekennzeichnet, daß** die Standard-Viskosität SV (DCE) des Regenerats durch die Nachkondensation um mindestens 100, bevorzugt 120 bis 250, erhöht ist.

9. Verfahren gemäß einem oder mehreren der Ansprüche 1 bis 8, **dadurch gekennzeichnet, daß** als kristallisierbarer Thermoplast ein Polyethylenterephthalat, Polybutylenterephthalat, Polyethylennaphthalat oder ein Gemisch davon eingesetzt wird.

10. Verfahren gemäß einem oder mehreren der Ansprüche 1 bis 9, **dadurch gekennzeichnet, daß** die kristallisierbaren Thermoplaste mit Additiven vermischt werden, die die Folie gegen UV-Strahlung stabilisieren, sie einfärben, flammhemmend, siegelfähig und/oder hydrolysestabil machen.

11. Verfahren gemäß einem oder mehreren der Ansprüche 1 bis 10, **dadurch gekennzeichnet, daß** das Eigenregenerat nach dem Aufkondensieren vorgetrocknet wird.

**Claims**

1. A process for production of a biaxially oriented film which comprises at least one crystallizable thermoplastic as main constituent and comprises at least 500 ppm, based on the weight of the thermoplastic, of a pigment, which comprises using at least 20 % by weight, based on the weight of the film, of inherent recycled material whose molecular weight has been increased by condensation processes.

2. The process as claimed in claim 1, wherein the thickness of the film is from 2 to 500 $\mu$m, preferably from 5 to 350 $\mu$m.

3. The process as claimed in claim 1 or 2, wherein, based on the weight of the thermoplastic(s), up to 25 % by weight of at least one pigment are added to the film.

4. The process as claimed in one or more of claims 1 to 3, wherein the film is a single-layer film produced via extrusion.

5. The process as claimed in one or more of claims 1 to 3, wherein the film is a multilayer film produced via coextrusion and having at least one core layer and at least one outer layer.

6. The process as claimed in one or more of claims 1 to 5, wherein the pigment used comprises titanium dioxide, barium sulfate, calcium carbonate, kaolin, silicon dioxide and/or an inorganic color pigment or inorganic black pigment.

7. The process as claimed in one or more of claims 1 to 6, which uses recycled material whose molecular weight has been increased via melt or solid-phase postcondensation.

8. The process as claimed in one or more of claims 1 to 7, wherein the standard viscosity SV (DCA) of the recycled material has been increased by the postcondensation process by at least 100.

9. The process as claimed in one or more of claims 1 to 8, which uses, as crystallizable thermoplastic, a polyethylene terephthalate, polybutylene terephthalate, polyethylene naphthalate, or a mixture of these.

10. The process as claimed in one or more of claims 1 to 9, wherein the crystallizable thermoplastics are mixed with additives which stabilize the film with respect to UV radiation, color the film, render the film flame-retardant, render the film sealable, and/or render the film resistant to hydrolysis.

11. The process as claimed in one or more of claims 1 to 10, wherein, after the condensation process which increases the molecular weight of the inherent recycled material, that material is predried.

**Revendications**

1. Procédé pour la fabrication d'un film orienté biaxialement qui contient au moins une matière thermoplastique cristallisable en tant que composant principal et au moins 500 ppm, par rapport au poids de la matière thermoplastique, d'un pigment, **caractérisé en ce que** dans ce procédé on utilise au moins 20 % en poids, par rapport au poids du film, de produit de régénération de même origine, condensé.

2. Procédé selon la revendication 1, **caractérisé en ce que** le film a une épaisseur de 2 à 500 $\mu$m, de préférence de 5 à 350 $\mu$m.

3. Procédé selon la revendication 1 ou 2, **caractérisé en ce qu'**on ajoute au film jusqu'à 25 % en poids, par rapport au poids de la matière thermoplastique ou des matières thermoplastiques, d'au moins un pigment.

4. Procédé selon une ou plusieurs des revendications 1 à 3, **caractérisé en ce que** le film est produit par extrusion, sous forme de film monocouche.

5. Procédé selon une ou plusieurs des revendications 1 à 3, **caractérisé en ce que** le film est produit par coextrusion, sous forme d'un film multicouche, comportant au moins une couche de base et au moins une couche de recouvrement.

6. Procédé selon une ou plusieurs des revendications 1 à 5, **caractérisé en ce qu'**on utilise comme pigment du dioxyde de titane, du sulfate de baryum, du carbonate de calcium, du kaolin, du dioxyde de silicium et/ou un pigment inorganique noir ou coloré.

7. Procédé selon une ou plusieurs des revendications 1 à 6, **caractérisé en ce qu'**on utilise un produit de régénération qui est condensé par post-condensation en phase solide ou en masse fondue.

8. Procédé selon une ou plusieurs des revendications 1 à 7, **caractérisé en ce que** la viscosité standard SV (DCE) du produit de régénération est augmentée d'au moins 100 par la post-condensation.

9. Procédé selon une ou plusieurs des revendications 1 à 8, **caractérisé en ce qu'**on utilise comme matière thermoplastique cristallisable un poly(éthylène-téréphtalate), un poly(butylène-téréphtalate), un poly(éthylène-naphtalate) ou un mélange de ceux-ci.

10. Procédé selon une ou plusieurs des revendications 1 à 9, **caractérisé en ce que** les matières thermoplastiques cristallisables sont mélangées avec des additifs qui stabilisent le film vis-à-vis du rayonnement UV, le colorent, le rendent ignifuge, soudable et/ou stable vis-à-vis de l'hydrolyse.

11. Procédé selon une ou plusieurs des revendications 1 à 10, **caractérisé en ce que** le produit de régénération de même origine est préséché après la condensation.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0483665 A

- EP 1418195 A